# EUROPÄISCHE PATENTANMELDUNG

(11) **EP 1 760 197 A2**
(43) Veröffentlichungstag der Anmeldung: **07.03.2007**
(21) Anmeldenummer: 06014781.6
(22) Anmeldetag: 15.07.2006
(51) Int. Cl.: E01C 5/16, E04F 15/06, E04F 13/12, E04C 2/08, E04C 2/26, E04C 2/292, E01C 11/22

(54) **Gestaltungs- oder Schmuckelemente aus Metall**

(30) Priorität: 17.08.2005 AT 13772005
(71) Anmelder: Umformtechnik GmbH, 8700 Leoben (AT)
(72) Erfinder: Rausch, Peter, 8621 Thörl (AT); Loziczky, Jörg, 8071 Hausmannstätten (AT); Waldhuber, Barbara, 8793 Trofaiach (AT)
(74) Vertreter: Lorenz, Werner

(57) **Zusammenfassung**

Gestaltungs- oder Schmuckelemente aus Metall zur Ergänzung von und/oder als Ersatz für Betonelemente(n) wie Pflastersteine, Randsteine, Poller, Stelen, Palisaden oder für Elemente aus Marmor, Kunstharzbeton oder dergleichen, wie Platten, Fliesen, Riemen, Leisten oder dergleichen, die aus Blechen als Hohlkörper gefertigt sind.

## Beschreibung

Die Erfindung betrifft Gestaltungs- oder Schmuckelemente aus Metall zur Ergänzung von und/oder als Ersatz für Betonelemente(n) wie Pflastersteine, Randsteine, Poller, Stelen, Palisaden oder für Elemente aus Marmor, Kunstharzbeton oder dergleichen, wie Platten, Fliesen, Riemen, Leisten oder dergleichen.

Es sind Elemente aus Metall bekannt, die der eingangs erwähnten Gattung zuzuordnen sind. So wurden früher Pflasterelemente aus Gusseisen erzeugt und verwendet, die Pflastersteine aus Beton oder Stein oder dergleichen ersetzten. Ebenfalls ist bekannt, Stahlplatten als Bodenbelag oder Wandverkleidung als Ersatz für Marmor- oder Steinfliesen einzusetzen. Weiters ist der Stand der Technik Fliesen für Boden und Wand aus Edelstahl zu verlegen (HOBA STEEL GMBH, in D-45503 Hattingen).

Diese bekannten gattungsgemäßen Elemente aus Metall sind also Vollkörper in verschiedenen Ausführungsformen. Diese Vollkörper sind kubisch und schwer oder flach mit zweidimensionaler Wirkung.

Der Erfindung liegt nun die Aufgabe zugrunde, für gattungsgemäße Elemente Möglichkeiten für Formenreichtum, vielseitigen Einsatz und leichte Verarbeitung, sowie ein Verfahren zur wirtschaftlichen Herstellung zu schaffen.

Erfindungsgemäß wird diese Aufgabe durch die im kennzeichnenden Teil von Anspruch 1 genannten Merkmale gelöst.

Die Hohlkörper können aus Blechen aus Stahl, Edelstahl, Aluminium oder dergleichen gefertigt sein, wobei die äußere Oberfläche unbearbeitet oder durch Bürsten, Polieren, Sandstrahlen, Einfärben, Einbrennlackieren oder dergleichen bearbeitet sein kann, und wobei die Oberseite der Hohlkörper ein Relief aufweisen können. Ein Relief kann einer Natursteinoberfläche nachempfunden sein, oder aber in Form von Rillen, Rippen oder Noppen ausgebildet sein. Auch hervortretende Buchstaben können das Relief bilden.

Es können somit Gestaltungs- und Schmuckelemente aus Metall zur Verfügung gestellt werden, die zur Ergänzung von und/oder als Ersatz für Betonelemente(n) und so weiter, für Aufgaben, wie eingangs beschrieben, verwendet werden können. Durch die verschiedenen Arten der zu verwendenden Werkstoffe sowie durch die verschiedenen Möglichkeiten der Oberflächengestaltung können die erfindungsgemäßen Elemente für zahlreiche. Einsatzgebiete verwendet werden. Sie haben auch den Vorteil des geringen Gewichtes, was für Verarbeitung und Transport wirtschaftlich erscheint.

In den Unteransprüchen sind weitere Merkmale der Erfindung sowie Verfahren zur Fertigung der erfindungsgemäßen Elemente beschrieben.

So sind in den Ansprüchen 6 und 7 erfindungsgemäße Elemente beschrieben, die an einer Seite, vorzugsweise der Unterseite - offene Hohlkörper und jeweils aus einem einzigen Teil gefertigt sein können, wobei die Außenhaut wenigstens annähernd eine einheitliche Dicke mit nur sehr geringen Maßabweichungen aufweisen kann.

Dadurch ist es möglich, verschiedenste Formen mit kubischem Effekt herzustellen, wobei die erfindungsgemäßen Elemente leicht sind und nur geringen Materialbedarf bedingen.

Die Ansprüche 8 und 9 beschäftigen sich mit der Ausbildung von Flanschen an der Unterseite der Hohlkörper, wobei die Flansche wenigstens annähernd um Wanddicke d des Hohlkörpers über die Unterkanten des Hohlkörpers nach unten zu vorspringen und im Grundriss gesehen im Uhrzeigersinn jeweils am Beginn einer Seite angeordnet sind, wobei die Flansche kleiner als die Hälfte einer Seite sind.

Die erfindungsgemäßen Elemente können zum Beispiel als Pflasterelemente eingesetzt werden, wobei durch die Anordnung der Flansche ein Verbund unter den einzelnen Elementen hergestellt ist.

Im Anspruch 10 wird darauf hingewiesen, dass erfindungsgemäße Gestaltungs- oder Schmuckelemente homogen oder auch gemischt mit Betonelementen oder dergleichen eingebaut sind.

Anspruch 11 weist auf die technischen Möglichkeiten der Verarbeitung der erfindungsgemäßen Elemente hinsichtlich Einbau in ein Lagerbett hin, wobei dies sowohl für den Boden als auch für die Wand zutrifft.

In Anspruch 12 ist auf die Möglichkeit hingewiesen, erfindungsgemäße Elemente mit Leucht- oder Lichtelementen oder mit Heizelementen auszustatten.

Anspruch 13 weist darauf hin, dass erfindungsgemäße Elemente in ihrer vielfältigen Anwendung auch für Entwässerungsmaßnahmen verwendet werden können und zwar derart, dass die Hohlkörper Abflussöffnungen für die Ableitung von Oberflächenwässern in den Untergrund oder in ein Entwässerungssystem aufweisen.

Eine interessante Möglichkeit, erfindungsgemäße Gestaltungs- oder Schmuckelemente auszuführen, wird in Anspruch 14 beschrieben. Das Verfüllen der Hohlkörper mit leichtem Füllmaterial durch Ausschäumen, oder Verfüllen mit Isolier- oder Dämmmaterial erweitert die Anwendungsvielfalt. So können z. B. fliesenartige Elemente relativ flach ausgeführt werden, um auf dem Lagerbett satt aufzuliegen. Andererseits können Isolier- oder Dämmaufgaben übernommen werden.

Im Anspruch 15 ist beschrieben, dass erfindungsgemäße Elemente mit Beton verfüllt sind. Dies erhöht die Stabilität der Hohlkörper, die z. B. als Pflasterelemente der Last von Fahrzeugen standhalten können.

Im Anspruch 16 ist festgehalten, dass an einer oder mehreren der Seitenwände der Hohlkörper Einprägungen ausgeformt sind, die nach innen vorspringen und eine Halterung für die Verfüllung bzw. für den Verfüllbeton bilden. Das heißt, dass Verfüllung oder Verfüllbeton bei Transport oder einer sonstigen mechanischen Beanspruchung gehindert wird, aus dem Hohlkörper zu fallen bzw. zu rutschen.

Im Anspruch 17 hat ein Verfahren zum Inhalt, das ein wirtschaftliches Verfüllen der Hohlkörper mit Beton beschreibt, wobei in der Hauptsache ein Füllrahmen auf einen Rütteltisch gesetzt ist und die kopfüber eingelegten Hohlkörper von oben her befüllt werden.

Im Anspruch 18 ist das Verfahren zur Fertigung erfindungsgemäßer Gestaltungs- oder Schmuckelemente aus Metall durch mechanisches oder hydromechanisches Tiefziehen der verwendeten Bleche beschrieben.

Durch die Anwendung der Erfindung sind für Technik und Architektur viele Wege offen. Gestaltungs- und Schmuckelemente sind sowohl im Garten- und Landschaftsbereich, als auch für den Innenbereich in verschiedensten Formen möglich. Flächengestaltungen an Boden und Wand, Einfassungen, Leiteinrichtungen, Entwässerungssysteme und dergleichen mehr sind realisierbar.

Die Erfindung ist nachfolgend in der Zeichnung anhand von 6 Figuren schematisch und beispielsweise dargestellt. Darin bedeuten die Figuren:
- Fig. 1: Schrägansicht eines erfindungsgemäßen Gestaltungs- oder Schmuckelements;
- Fig. 2: Draufsicht auf ein erfindungsgemäßes Gestaltungs- oder Schmuckelement;
- Fig. 3: Seitenansicht eines erfindungsgemäßen Gestaltungs- oder Schmuckelements;
- Fig. 4: Schnitt durch eine Reihe erfindungsgemäßer Gestaltungs- oder Schmuckelemente;
- Fig. 5: Schnitt durch ein erfindungsgemäßes Gestaltungs- oder Schmuckelement; und
- Fig. 6: Schematische Darstellung des Verfahrens gemäß Anspruch 17.

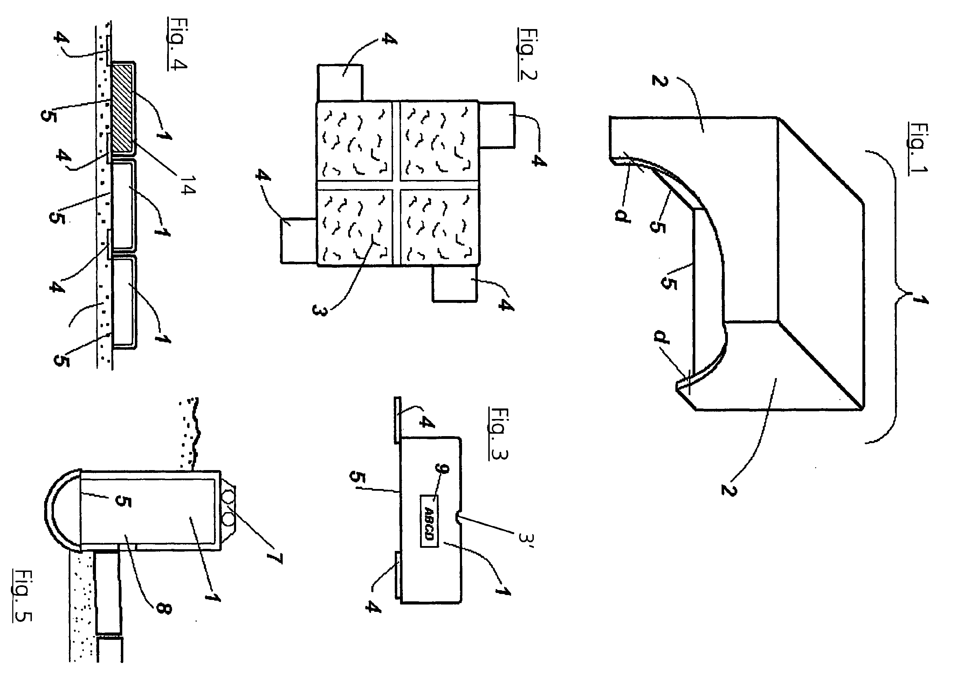

Fig. 1 zeigt einen kubischen Hohlkörper 1 mit einem dem Betrachter verbesserten Einblick gewährenden Ausschnitt. Die Außenhaut 2 weist eine einheitliche Dicke d auf und ist aus einem einzigen Teil gefertigt. An der Unterseite ist die Außenhaut 2 bzw. der Hohlkörper 1 durch gerade Unterkanten 5 begrenzt.

In Fig. 2 ist eine Draufsicht auf ein Gestaltungs- oder Schmuckelement zu sehen, wobei dieses etwa die Form eines in vier Teile geteilten Pflastersteines aufweist. An der Oberseite ist das Element mit einem Relief 3 versehen, das in diesem Beispiel etwa das Aussehen einer Natursteinoberfläche besitzt. Flanschen 4 stehen vom Körper des erfindungsgemäßen Elements ab.

Fig. 3 stellt die Seitenansicht eines Elements dar und kann der Draufsicht aus Fig. 2 zugeordnet werden. Man sieht den Hohlkörper von der Seite her, wobei an der Oberseite ein Relief 3 ausgebildet ist. Die Flanschen 4 liegen unter der Unterkante 5, wobei der linke Flansch 4 nach außen absteht und der rechte Flansch 4 analog der Darstellung in Fig. 2 von vorne gesehen wird. Auch ist in dieser Figur eine Einprägung 3' zu sehen. An den Seitenflächen oder auch auf der Oberseite können Beschriftungen 9 auf- oder eingebracht werden.

In Fig. 4, einem Schnitt durch eine Reihe von Hohlkörpern 1, sieht man den durch die Flanschen 4 erzielten Verbund unter den Elementen. Die in einem Bett 6 aus Splitt, Sand, Mörtel, Unterbeton, Montageschaum oder aus elastischem Kitt lagernden Hohlkörper 1 liegen jeweils rechtsseitig mit der Unterkante 5 auf dem Flansch 4 des rechten Nachbarelementes, wodurch eine Sicherung gegen Ausheben einzelner Elemente gegeben ist. Wenn eine Wärmeisolierung vorgesehen ist, können die Hohlkörper 1 auch mit Isoliermaterial 14 im Inneren ausgefüllt sein, wie dies bei dem linken Hohlkörper 1 dargestellt ist.

Fig. 5 zeigt einen Schnitt durch ein Gestaltungs- oder Schmuckelement mit stehendem Hohlkörper 1. Das Element ist als Begrenzung einer Pflasterfläche eingesetzt und weist eine Abflussöffnung 8 zur Entwässerung der Pflasterfläche auf. Unter der Unterkante 5 des Elementes ist eine Rinne zur Ableitung des Wassers angeordnet. Oberseitig weist der Hohlkörper 1 des Elementes außen ein Lichtelement 7, wie z. B. einen Reflektor, auf, der eine Leitfunktion ausüben kann.

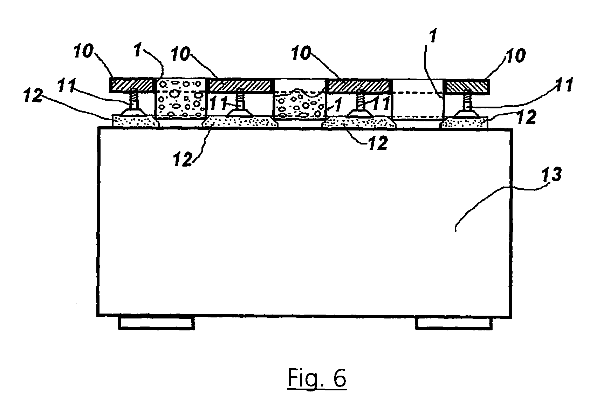

Fig. 6 veranschaulicht schematisch das Verfahren zur Verfüllung der Hohlkörper 1 mit Beton. Auf einem Rütteltisch 13 lagert über höhenverstellbare elastische Stützen 11, die auf einer Unterlagsplatte 12 stehen, ein Füllrahmen 10. Der Füllrahmen 10 besitzt Durchbrüche zur Aufnahme der Hohlkörper 1, die mit den Öffnungen nach oben eingesetzt werden, wobei sie mit der (untenliegenden) Oberseite in die zugeordneten Öffnungen der Unterlagsplatte 12 geringfügig einrasten. Der Vorteil dieser Vorgangsweise bzw. der Vorrichtung ist der, dass produktionsbedingte Betonreste in dem verbleibenden Raum zwischen Oberseite des Rütteltisches 13 und (untenliegender) Oberseite des Hohlkörpers 1 fallen und so verhindert wird, dass die Oberseite der Hohlkörper 1 zerkratzt wird. Aus der Zeichnung ist auch zu sehen, dass der Hohlkörper 1 links bereits mit Beton verfüllt ist, der mittlere Hohlkörper 1 etwa zur Hälfte verfüllt ist, während der rechte noch leer ist. Nach dem Verfüllen sämtlicher Hohlkörper 1 und dem Abziehen und Glätten des Betons wird der Füllrahmen 10 gehoben und die verfüllten Hohlkörper 1 können entnommen und zum Aushärten des Betons gelagert werden.

Die in der Zeichnung dargestellten schematischen Beispiele zeigen natürlich nur einen geringen Teil der Anwendungsmöglichkeiten und Formen erfindungsgemäßer Gestaltungs- oder Schmuckelemente. Der Fachmann wird unter Anleitung der Beschreibung, der Patentansprüche und der Zeichnung selbständig im Rahmen der Erfindung weitere Lösungen finden.

## Patentansprüche

1. Gestaltungs- oder Schmuckelemente aus Metall zur Ergänzung von und/oder als Ersatz für Betonelemente(n) wie Pflastersteine, Randsteine, Poller, Stelen, Palisaden oder für Elemente aus Marmor, Kunstharzbeton oder dergleichen, wie Platten, Fliesen, Riemen, Leisten oder dergleichen, **dadurch gekennzeichnet, dass** sie sie aus Blechen als Hohlkörper (1) gefertigt sind.

2. Gestaltungs- oder Schmuckelemente nach Anspruch 1, **dadurch gekennzeichnet, dass** die Hohlkörper (1) aus Blechen aus Stahl, Edelstahl, Aluminium oder anderen Metallen gefertigt sind.

3. Gestaltungs- oder Schmuckelemente nach Anspruch 1 oder 2, **dadurch gekennzeichnet, dass** die äußeren Oberflächen der Hohlkörper (1) unbearbeitet sind.

4. Gestaltungs- oder Schmuckelemente nach Anspruch 1 oder 2, **dadurch gekennzeichnet, dass** die äußeren Oberflächen der Hohlkörper (1) durch Bürsten, Polieren, Sandstrahlen, Einfärben, Einbrennlackieren oder dergleichen bearbeitet sind.

5. Gestaltungs- oder Schmuckelemente nach Anspruch 1, 2 oder 4, **dadurch gekennzeichnet, dass** die Oberseiten der Hohlkörper (1) ein Relief (3) aufweisen können.

6. Gestaltungs- oder Schmuckelemente nach einem der Ansprüche 1 bis 5, **dadurch gekennzeichnet, dass** die Hohlkörper (1) an einer Seite - vorzugsweise der Unterseite - offen sind.

7. Gestaltungs- oder Schmuckelemente nach einem der Ansprüche 1 bis 6, **dadurch gekennzeichnet, dass** die Hohlkörper (1) jeweils aus einem einzigen Stück gefertigt sind, wobei die Außenhaut (2) wenigstens annähernd eine einheitliche Dicke (d) besitzt.

8. Gestaltungs- oder Schmuckelemente nach Anspruch 6 oder 7, **dadurch gekennzeichnet, dass** seitlich der offenen Unterseiten nach außen vorragende Flansche (4) angeordnet sind.

9. Gestaltungs- oder Schmuckelemente nach Anspruch 8, **dadurch gekennzeichnet, dass** die Flansche (4) wenigstens annähernd um Wanddicke (d) des Hohlkörpers (1) über die Unterkanten (5) des Hohlkörpers (1) nach unten zu vorspringen und im Grundriss gesehen im Uhrzeigersinn jeweils am Beginn einer Seite angeordnet sind, wobei die Flansche (4) kleiner als die Hälfte einer Seite sind.

10. Gestaltungs- oder Schmuckelemente nach Anspruch 1 bis 9, **dadurch gekennzeichnet, dass** die Hohlkörper (1) in Gattungseinheiten oder gemeinsam mit Betonelementen oder dergleichen gemäß dem Oberbegriff von Anspruch 1 durch Mischen, Muster- oder Ornamenteinlage eingebaut sind.

11. Gestaltungs- oder Schmuckelemente nach Anspruch 1 bis 10, **dadurch gekennzeichnet, dass** die Hohlkörper (1) in ein Bett (6) aus Sand, Splitt, Mörtel, Unterbeton, Montageschaum oder aus dauerelastischem Kitt oder dergleichen eingesetzt sind.

12. Gestaltungs- oder Schmuckelemente nach Anspruch 1 bis 11, **dadurch gekennzeichnet, dass** die Hohlkörper (1) mit Lichtelementen (7) wie Reflektoren, Leuchten, Scheinwerfer oder dergleichen, oder mit Heizelementen zum Erwärmen der Oberseite der Hohlkörper (1) versehen sind.

13. Gestaltungs- oder Schmuckelemente nach Anspruch 1 bis 12, **dadurch gekennzeichnet, dass** die Hohlkörper (1) Abflussöffnungen (8) für die Ableitung von Oberflächenwässern in den Untergrund oder in ein Entwässerungssystem aufweisen.

14. Gestaltungs- oder Schmuckelemente nach Anspruch 1 bis 13, **dadurch gekennzeichnet, dass** die Hohlkörper (1) ausgeschäumt oder mit einem Isolier- oder Dämmmaterial oder dergleichen verfüllt sind.

15. Gestaltungs- oder Schmuckelemente nach Anspruch 1 bis 13, **dadurch gekennzeichnet, dass** die Hohlkörper (1) mit Beton ausgefüllt sind.

16. Gestaltungs- oder Schmuckelemente nach Anspruch 14 oder 15, **dadurch gekennzeichnet, dass** an einer oder mehreren Seitenwänden der Hohlkörper (1) Einprägungen ausgeformt sind, die nach innen vorspringen und eine Halterung für die Verfüllung bzw. für den Verfüllbeton bilden.

17. Verfahren zur Verfüllung der Hohlkörper (1) mit Beton nach Anspruch 15, **dadurch gekennzeichnet, dass** ein Füllrahmen (10) aus Kunststoff mit Ausnehmungen für das Einsetzen von Hohlkörpern (1) mit der offenen Unterseite nach oben mit höhenverstellbaren elastischen Stützen (11) auf einer Unterlagsplatte (12) steht, wobei die auf einem Rütteltisch (13) gelagerte Unterlagsplatte (12) Ausnehmungen besitzt, welche den Ausnehmungen des Füllrahmens (10) zugeordnet werden, und wobei die Hohlkörper (1) geringfügig in die Ausnehmungen der Unterlagsplatte (12) einrasten, und wobei die Hohlkörper (1) von oben her mit Beton verfüllt werden und der Beton auf Höhe der Füllrahmenoberseite gleichzeitig auf Höhe der oben liegenden Unterkanten (5) der Hohlkörper (1) geglättet und abgezogen wird.

18. Verfahren zur Fertigung von Gestaltungs- oder Schmuckelementen nach einem oder mehreren der Ansprüche 1 bis 16, **dadurch gekennzeichnet, dass** die Fertigung durch mechanisches oder hydromechanisches Tiefziehen der Bleche erfolgt.
